(19) Europäisches Patentamt

European Patent Office

Office européen des brevets

(11) **EP 0 999 090 A2**

(12) **EUROPÄISCHE PATENTANMELDUNG**

(43) Veröffentlichungstag:
  10.05.2000  Patentblatt 2000/19

(51) Int. Cl.⁷: **B60K 37/00**

(21) Anmeldenummer: **99120826.5**

(22) Anmeldetag: **22.10.1999**

(84) Benannte Vertragsstaaten:
  **AT BE CH CY DE DK ES FI FR GB GR IE IT LI LU
  MC NL PT SE**
  Benannte Erstreckungsstaaten:
  **AL LT LV MK RO SI**

(30) Priorität: **05.05.1999 DE 19920595
        05.11.1998 DE 19850900**

(71) Anmelder:
  **Mannesmann VDO Aktiengesellschaft
  60388 Frankfurt am Main (DE)**

(72) Erfinder:
  • **Wich, Rolf
    63512 Hainburg (DE)**
  • **Zöllner, Gerd
    61137 Schöneck (DE)**

(74) Vertreter:
  **Rassler, Andrea, Dipl.-Phys. et al
  Kruppstrasse 105
  60388 Frankfurt (DE)**

(54) **Baugruppe für das Cockpit eines Fahrzeugs**

(57)  Die Erfindung betrifft eine Baugruppe eines Fahrzeugs, insbesondere eines Kraftfahrzeugs, mit einem karosseriefesten Halter (12,13,14,15) und einer an dem Halter befestigbaren Cockpitverkleidung (5) sowie ein Verfahren zur Befestigung der Cockpitverkleidung in der Baugruppe.

Um eine vereinfachte und werkzeugfreie Montier- und Demontierbarkeit der Baugruppe zu erreichen, schlägt die Erfindung vor, daß die Cockpitverkleidung an ihrer dem Fahrzeuginnenraum abgewandten Seite ein in den Halter einführbares und in diesem halter- und abstützbares Stützelement (4,11) aufweist.

Fig. 1

**Beschreibung**

Die Erfindung betrifft eine Baugruppe für das Cockpit eines Fahrzeugs, insbesondere eines Kraftfahrzeugs, mit einem karosseriefesten Halter und einer an dem Halter befestigbaren Cockpitverkleidung.

Derartige Baugruppen sind bekannt und werden z. B. in Kraftfahrzeuger zur Innenraumverkleidung verwendet. Dabei sind großflächige Cockpitverkleidungen, die innerhalb eines Cockpits angeordnete Leitungen und Aggregate zum Fahrgastraum hin abdecken, an einem sich in etwa über die Breite des Fahrzeuginnenraums erstreckenden Querträger anschraubbar. Insbesondere bei in einem unteren Bereich des Cockpits anzubringenden Fußraumverkleidungen auf der Fahrer- und Beifahrerseite erweist sich die schlechte Zugänglichkeit dieses Bereichs sowie die Notwendigkeit, hier Verschraubungen vornehmen zu müssen, als aufwendig und sehr nachteilig.

Der Erfindung liegt daher die Aufgabe zugrunde, eine Baugruppe der eingangs genannten Art zu schaffen, die sowohl einfach und wenig bauteileaufwendig montier- und demontierbar ist als auch eine schnelle und paßgenaue Befestigung der Cockpitverkleidung an dem Halter gewährleistet Weiterhin soll ein einfaches und montagesicheres Verfahren zur Befestigung der Cockpitverkleidung an dem Halter vorgeschlagen werden.

Die erstgenannte Aufgabe wird erfindungsgemäß dadurch gelöst, daß die Cockpitverkleidung an ihrer dem Fahrzeuginnenraum abgewandten Seite ein in den Halter einführbares und in diesem halter- und abstützbares Stützelement aufweist. Damit ist die Cockpitverkleidung ohne Werkzeuge und ohne weitere Bauteile wie Schrauben oder Niete einfach in das Fahrzeug einsetzbar. Gleichzeitig ist eine hohe Stabilität der Baugruppe mit der Verkleidung gegeben, die dennoch für Service- und Instandhaltungsarbeiten leicht demontierbar ist. Der Halter kann dabei in beliebiger Weise fest mit der Fahrzeugkarosserie verbunden sein.

Gemäß einer vorteilhaften Weiterbildung der Erfindung ist das Stützelement in dem Halter kraftschlüssig halterbar. Auf diese Weise wird die Cockpitverkleidung z. B. durch ein in dem Halter angeordnetes elastisches Element sicher fixiert und ist dennoch leicht entnehmbar.

Es ist vorstellbar, daß die Cockpitverkleidung massiv ausgebildet ist und Funktionsgruppen wie eine Airbageinheit oder Bedienungselemente für eine Heizungs-/Klimaanlage aufweist. Vorzugsweise weist die Cockpitverkleidung jedoch eine dem Fahrzeuginnenraum zugewandte Abdeckung von geringer Stärke auf, so daß die Verkleidung ein sehr geringes Gewicht besitzen kann und gleichzeitig die Verletzungsgefahr für Fahrzeuginsassen im Crashfall durch eine flächenhafte Gestaltung besonders gering ist. Die Stärke der Verkleidung liegt dabei vorzugsweise im Bereich weniger Millimeter. Für eine den Einbau der Cockpitverkleidung erleichternde und die Dauerhaltbarkeit verbessernde erhöhte Eigenstabilität der Verkleidung ist die Abdeckung auf ihrer dem Fahrzeuginnenraum abgewandten Seite vorzugsweise mit einem Steg versehen. Für großflächige Abdeckungen kann es sinnvoll sein, eine Mehrzahl solcher Stege zu verwenden. Durch eine damit zu erzielende Verringerung der Teilevielfalt sowie des Herstellungsaufwands ist es von besonderem Vorteil, wenn der Steg ein einziges Bauteil bildend mit dem Stützelement verbunden ist.

Insbesondere bei großflächigen Cockpitabdeckungen ist es von Vorteil, wenn die Abdeckung an ihrer dem Fahrzeuginnenraum abgewandten Seite mit einem Schaumstoff versehen ist. Dadurch werden einerseits zu Störgeräuschen und möglicherweise mechanischen Beschädigungen führende Vibrationen der Abdeckung vermieden und andererseits erfolgt gleichzeitig bei im Cockpit verlaufenden Heizungskanälen mittels des Schaumstoffs eine Wärmeisolierung und somit eine Verminderung des Wärmeverlusts. Die Verwendung eines Schaumstoffs ist bevorzugt, es können an seiner Stelle aber auch andere Dämmaterialien vorgesehen sein.

Man könnte sich vorstellen, daß die Abdeckung eine Pappe ist. Die Herstellung der Cockpitverkleidung ist hingegen gemäß einer anderen vorteilhaften Weiterbildung der Erfindung besonders einfach und vor allem in großen Serien sehr kostengünstig, wenn die Abdeckung mit dem Steg und dem Stützelement ein einziges Bauteil bildend verbunden und ein Kunststoffspritzgußbauteil ist.

Aufgrund der nur eingeschränkten Zugänglichkeit des Cockpitbereichs in Fahrzeugen erstreckt sich das Stützelement in der Einbaulage der Verkleidung vorzugsweise in etwa horizontal von der Abdeckung weg. Somit kann die Abdeckung in einem im wesentlichen horizontal verlaufenden Einbauvorgang an dem Halter montiert werden.

Zur positions- und zielgenauen Führung der Verkleidung beim Einbau ist es besonders vorteilhaft, wenn das Stützelement an seinem der Abdeckung abgewandten Ende eine hakenförmige Abwinkelung aufweist. Mit dieser Abwinkelung kann die Cockpitverkleidung in einem ersten Einbauschritt in den Halter eingesetzt werden und beim weiteren Einführen des Stützelements in den Halter durch Führung des Stützelements an dem Halter ihre Zielposition exakt erreichen.

Die Halterung der Cockpitverkleidung in der Baugruppe wird weiter verbessert und das Einführen in den Halter vereinfacht, wenn die Cockpitverkleidung an ihrer dem Fahrzeuginnenraum abgewandten Seite mit vertikalem Abstand zueinander zwei Stützelemente aufweist, die in jeweils einen karosseriefesten Halter einführbar und in diesem halterbar sind.

Wenn die Cockpitverkleidung - wie in Kraftfahrzeugen üblich - in ein in etwa vertikal angeordnetes Cockpit einzubauen ist, ist es von besonderem Vorteil, wenn die Abwinkelung des oberen Stützelements unter in etwa 90° und die Abwinkelung des unteren Stützelements unter in etwa 150° gegenüber dem jeweils in etwa horizontal angeordneten, der Abdeckung zugewandten Teil der Stützelemente in der Einbaulage der Verkleidung nach unten gerichtet ist. Damit können sowohl das obere als auch das untere Stützelement in den jeweils korrespondierenden Halter eingehängt werden, und beim weiteren Einführen der Stützelemente in die Halter dient das untere Stützelement als Führung für die Cockpitverkleidung zum Erreichen ihrer Endposition.

Es kann hinreichend sein, daß die Cockpitverkleidung lediglich mit Stützelement und Halter im Cockpit fixiert wird. Insbesondere bei großflächigen Abdeckungen ist es jedoch besonders vorteilhaft, wenn eine karosseriefeste Abstützung vorgesehen ist und wenn die Cockpitverkleidung an die Abstützung anlegbar ist. Dadurch werden mögliche Schwingungen der Verkleidung wirkungsvoll unterbunden. Vorzugsweise weist die Abstützung eine Nut zur Aufnahme eines freien Endes der Abdeckung auf, so daß die Verkleidung in einem Bereich sicher gehalten wird, der am stärksten schwingungsgefährdet ist.

Man könnte sich vorstellen, daß der Halter ein rohrförmiges Element oder eine Drahtschlinge ist. Von besonderem Vorteil ist es jedoch, wenn der Halter eine obere und eine untere Begrenzung, die in etwa parallel zueinander und quer zum Stützelement verlaufen, aufweist und wenn das Stützelement zwischen die Begrenzungen einführbar ist. Diese einfache Ausführung, bei der das Stützelement lediglich an einer oberen und einer unteren Seite geführt ist, bietet sich insbesondere dann an, wenn in einer Horizontalebene mehrere Halter nebeneinander angeordnet sind, so daß hierdurch eine seitliche Führung der Cockpitverkleidung gewährleistet ist. Im einfachsten und kostengünstigsten Fall ist die Begrenzung vorzugsweise jeweils ein Bolzen. Die Einführung des Stützelements in den Halter kann erleichtert und die Stabilität der gesamten Cockpitbaugruppe erhöht werden, wenn die Begrenzung vorteilhaft jeweils eine Kante einer Platte ist. Dabei wird eine hohe Steifigkeit der Baugruppe erreicht, wenn gemäß einer anderen vorteilhaften Weiterbildung der Erfindung der Halter an einer Instrumententafel oder an einem Cockpitquerträger angeordnet ist.

Eine lagesichere Anordnung der Cockpitverkleidung in der Baugruppe kann allein durch Abstützung und Halterung des Stützelements in dem Halter erreicht werden. Um ein Herauswandern der Verkleidung aus dem Halter auch über eine lange Betriebsdauer des Fahrzeugs und bei starker schwingender Anregung, wie sie vor allem beim Betrieb von Kraftfahrzeugen fortdauernd auftritt, sicherzustellen, ist es von besonderem Vorteil, wenn die Cockpitverkleidung in ihrem in der Einbaulage oberen Bereich einen Klips zur Verrastung mit einer Instrumententafel aufweist. Durch die Anordnung des Klipses im oberen Bereich der Verkleidung ist eine gute Zugänglichkeit der Verrastungsstelle sowohl beim Einbau als auch bei einer möglichen Demontage der Verkleidung gewährleistet.

Der leichte und zielgenaue Einbau der Cockpitverkleidung in die erfindungsgemäße Baugruppe erweist sich als besonders vorteilhaft, wenn die Cockpitverkleidung eine Fußraumverkleidung und somit in einem nur schwer zugänglichen Fahrzeugbereich anzuordnen ist.

Die Anzahl der Bauelemente der Baugruppe kann vorteilhaft verringert und somit der Zusammenbau und die Lagerhaltung vereinfacht werden, wenn die Cockpitverkleidung gemäß einer anderen vorteilhaften Weiterbildung der Erfindung mit einem Luftkanal oder einem Handschuhkasten versehen ist. Der Luftkanal, bei dem es sich vorteilhaft um einen Fußraumheizkanal mit Ausströmern im Fußraumbereich des Fahrzeuginnenraums handelt, kann dabei vorteilhaft in einfacher Weise beim Einbau der Verkleidung in die Baugruppe mit weiteren, im Cockpit vorhandenen Luftkanälen verbunden werden.

Die zweitgenannte Aufgabe, nämlich die Schaffung eines Verfahrens zur Befestigung einer Cockpitverkleidung an einem Halter in einer Baugruppe für das Cockpit eines Fahrzeugs, wird erfindungsgemäß dadurch gelöst, daß die Cockpitverkleidung mit einem an ihrer dem Fahrzeuginnenraum abgewandten Seite angeordneten Stützelement in einen karosseriefesten Halter eingehängt, um eine imaginäre Schwenkachse verschwenkt und in in etwa horizontaler Richtung in den Halter eingeschoben wird. Eine erfindungsgemäße Lösung der Aufgabe liegt alternativ auch bei einem Verfahren vor, nach welchem die Cockpitverkleidung mit einem an ihrer dem Fahrzeuginnenraum abgewandten Seite angeordneten Stützelement in einen karosseriefesten Halter eingehängt, in in etwa horizontaler Richtung in den Halter eingeschoben und um eine imaginäre Schwenkachse verschwenkt wird. Ohne zusätzliches Werkzeug ist somit auch an schwer zugänglichen Stellen eines Fahrzeuginnenraums eine einfache und zielsichere Montage der Cockpitverkleidung sichergestellt. Auch ein Ausbau der Verkleidung im Servicefall ist in entsprechend umgekehrter Reihenfolge der Verfahrensschritte in ebenso einfacher Weise ermöglicht.

Gemäß einer vorteilhaften Weiterbildung der Erfindung beträgt die Verschwenkung um die Schwenkachse 3 bis 5° und der Einschiebeweg 15 bis 25 mm, so daß die Befestigung der Verkleidung in einem sehr engen Raumbereich erfolgen kann.

Ein Schwingen der Cockpitverkleidung im Betrieb des Fahrzeugs wird zuverlässig vermieden, wenn entsprechend einer anderen vorteilhaften Weiterbildung der Erfindung beim Einschieben ein freies Ende der Cockpitverkleidung in eine Nut einer karosseriefesten Abstützung eingeführt wird. Zur dauerhaften Lagesicherung wird die Cockpitverkleidung nach dem Einschieben oder nach dem Verschwenken vorteilhaft mittels eines in ihrem oberen Randbereich angeordneten Klipses mit einer Instrumententafel verrastet.

Die Erfindung kann sehr unterschiedlich ausgeführt werden. Sie wird im folgenden anhand von in der beigefügten Zeichnung dargestellten Ausführungsbeispielen näher erläutert. Darin zeigt

Figur 1    eine erfindungsgemäße Baugruppe für das Cockpit eines Fahrzeugs mit einer Cockpitverkleidung in einer Seitenansicht und

Figur 2    eine perspektivische Ansicht einer weiteren Cockpitverkleidung.

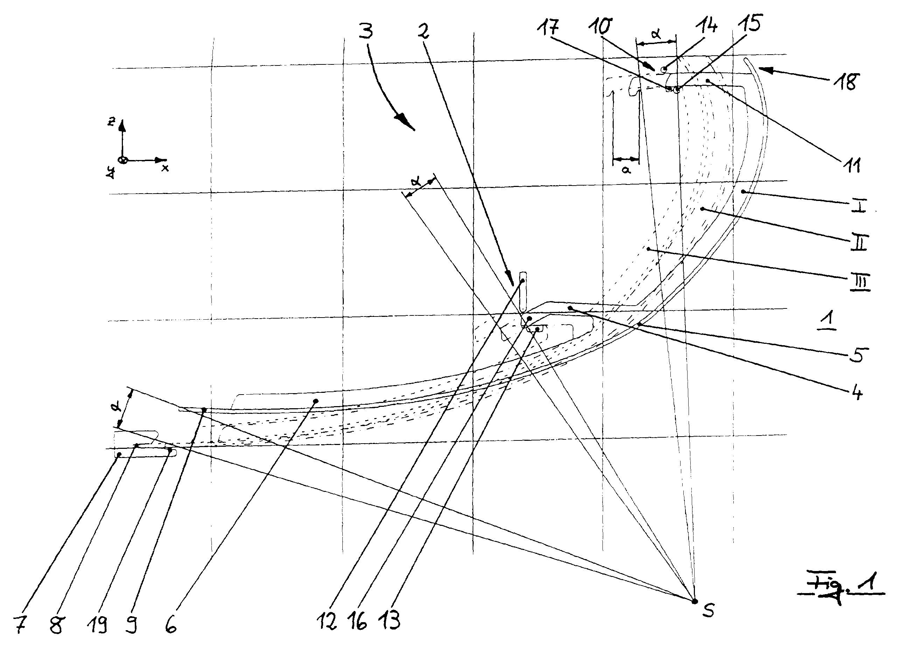

Figur 1 zeigt eine ein nicht weiter dargestelltes Cockpit eines Kraftfahrzeugs zu einem Fahrzeuginnenraum 1 hin abgrenzende Cockpitverkleidung 3 in Seitenansicht. Die Cockpitverkleidung 3 ist eine oberhalb des Fahrerfußraums angeordnete Fußraumverkleidung, so daß unterhalb der Cockpitverkleidung 3, d. h. in negativer z-Richtung des eingezeichneten Koordinatensystems, Fahr- und Bremspedal des Kraftfahrzeugs angeordnet sind. Die x-Achse des Koordinatensystems verläuft somit entgegengesetzt zur Fahrtrichtung und parallel zur Fahrzeuglängsachse, die z-Achse beschreibt eine Parallele zur Fahrzeughochachse und die y-Achse eine Parallele zur Fahrzeugquerachse.

Die Cockpitverkleidung 3 ist an ihrer dem Fahrzeuginnenraum 1 zugewandten Seite mit einer großflächigen Abdeckung 5 versehen, die eine Stärke von ca. 2 - 3 mm und Außenabmessungen von in etwa 450 mal 500 mm aufweist. An ihrer dem Innenraum 1 abgewandten Seite ist die Abdeckung 5 zur Versteifung mit zwei parallel verlaufenden Stegen 6, von denen einer in dieser Ansicht verdeckt ist, versehen.

Die Stege 6 sind an ihrer von der Abdeckung 5 weg weisenden Seite jeweils mit einem unteren Stützelement 4 und einem oberen Stützelement 11 versehen, welche Stützelemente 4, 11 sich in in etwa horizontaler Richtung von den Stegen 6 weg erstrecken. In ihrem freien Endbereich weisen die unteren Stützelemente 4 eine Abwinkelung 16 auf, die unter in etwa 150° gegenüber dem horizontal angeordneten, der Abdeckung 5 zugewandten Teil der Stützelemente 4 nach unten gerichtet ist. Die oberen Stützelemente 11 sind an ihrem freien Ende mit einer unter in etwa 90° gegenüber dem horizontal angeordneten Teil der Stützelemente 11 nach unten gerichteten Abwinkelung 17 versehen. Die Stützelemente 4, 11 greifen jeweils in einen unteren Haller 2, der von einer vertikal angeordneten Platte 12 und einer horizontal angeordneten Platte 13 gebildet wird, sowie in einen oberen Halter 10 ein. Der obere Halter 10 besteht aus zwei in negativer x-Richtung versetzt zueinander angeordneten und vertikal beabstandeten, parallelen Bolzen 14, 15, die ebenso wie die Platten 12, 13 des unteren Halters 2 mit einem hier nicht dargestellten Cockpitquerträger verbunden sind. Entgegen der Darstellung können die Bolzen 14, 15 auch durch entsprechende Kanten von Platten ersetzt werden.

In einer Darstellung I (Einhängeposition) der Cockpitverkleidung 3 mit durchgezogenen Linien ist eine Position wiedergegeben, in der die Cockpitverkleidung 3 in einem ersten Zusammenbauschritt mit den Stützelementen 4, 11 in die Halter 2, 10 eingehängt ist. Eine weitere Darstellung II (Rotationsposition) der Cockpitverkleidung 3 mit strichpunktierten Linien gibt eine Position wieder, in der die Cockpitverkleidung 3 - geführt durch die Abwinkelungen 16 der unteren Stützelemente 4 in dem unteren Halter 2 - um einen Winkel $\alpha$ von in etwa 4° entgegen dem Uhrzeigersinn um eine imaginäre Schwenkachse S geschwenkt ist. Dabei kommt ein unteres freies Ende 9 der Abdeckung 5 in eine Einführlage vor einer Nut 8, die eine das spätere Einführen erleichternde Einführschräge 19 aufweist, einer an einer hier nicht dargestellten Stirnwand des Fahrzeugs befestigten Abstützung 7. Die Einführlage wird dabei durch die vorbeschriebene Ausbildung der Stützelemente 4, 11 und der Halter 2, 10 zwangsläufig gefunden. Die Abwinkelungen 16, 17 an den Stützelementen 4, 11 sind dabei zusätzlich bogenförmig ausgebildet, wobei sich die Länge des Bogens in etwa aus dem Produkt (Abstand von der Schwenkachse S) * (Winkel $\alpha$ / [rad]) ergibt; der Radius des Bogens entspricht in etwa seinem Abstand von der Schwenkachse S.

In einer dritten Darstellung III (Translationsposition), die mit gestrichelten Linien die Cockpitverkleidung 3 wiedergibt, ist die endgültige Einbauposition der Cockpitverkleidung 3 gezeigt. Diese Position ergibt sich nach einer der Rotation um die Schwenkachse S nachfolgenden Verschiebung der Verkleidung 3 in negativer x-Richtung um einen Translationsweg a von ca. 20 mm. In dieser Position wird die Cockpitverkleidung 3 mittels ihrer Stützelemente 4, 11 in den Haltern 2, 10 abgestützt und gehalten und das freie Ende 9 der Abdeckung 5 in der stirnwandfesten Abstützung 7 vibrationssicher fixiert. Ein hier nicht dargestellter, in einem oberen Bereich 18 der Cockpitverkleidung 3 angeordneter Klips verrastet die Verkleidung 3 zusätzlich lagesichernd an einer hier ebenfalls nicht dargestellten Instrumententafel.

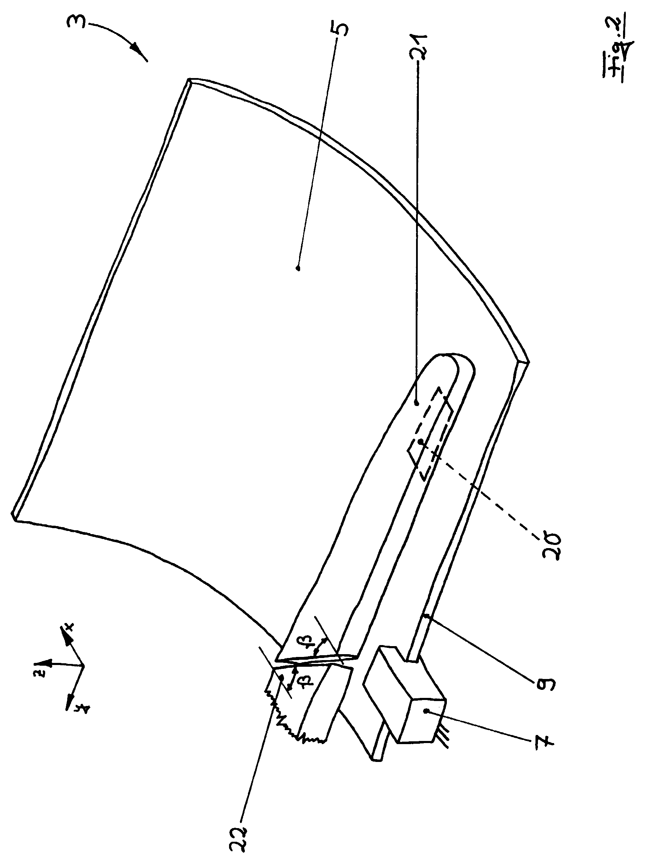

Eine perspektivische und vereinfachte Ansicht einer Cockpitverkleidung 3 mit einer Abdeckung 5 zeigt Figur 2. Gegenüber der Ausführungsform nach Figur 1 weist die Cockpitverkleidung 3 als einzigen Unterschied hier zusätzlich einen Fußraumheizkanal 21 auf, der mit einer in der Abdeckung 5 vorgesehenen Ausströmöffnung 20 verbunden ist. Über einen Heizkanalanschluß 22 der Fahrzeugheizanlage ist dem Fahrzeugfußraum so über den Fußraumheizkanal 21 und die Ausströmöffnung 20 erwärmte Luft zuführbar.

Der Heizkanalanschluß 22 und der Fußraumheizkanal 21 sind an ihren sich gegenüberliegenden Enden korrespondierend unter einem Winkel $\beta$ von in etwa 45° angeschrägt, so daß diese Enden beim Verschieben der Cockpitverkleidung 3 in negativer x-Richtung großflächig aneinandergefügt werden. Somit entsteht ein geschlossener Heizkanal. Diese Position wird gleichzeitig mit einer Fixierung eines freien Endes 9 der Abdeckung 5 in einer stirnwandfesten Abstützung 7 erreicht.

**Patentansprüche**

1. Baugruppe für das Cockpit eines Fahrzeugs, insbesondere eines Kraftfahrzeugs, mit einem karosseriefesten Halter und einer an dem Halter befestigbaren Cockpitverkleidung, **dadurch gekennzeichnet**, daß die Cockpitverkleidung (3) an ihrer dem Fahrzeuginnenraum (1) abgewandten Seite ein in den Halter (2; 10) einführbares und in diesem halter- und abstützbares Stützelement (4; 11) aufweist.

2. Baugruppe nach Anspruch 1, **dadurch gekennzeichnet**, daß das Stützelement (4; 11) in dem Halter (2; 10) kraftschlüssig halterbar ist.

3. Baugruppe nach Anspruch 1 oder 2, **dadurch gekennzeichnet**, daß die Cockpitverkleidung (3) eine dem Fahrzeuginnenraum (1) zugewandte Abdeckung (5) von geringer Stärke aufweist.

4. Baugruppe nach Anspruch 3, **dadurch gekennzeichnet**, daß die Abdeckung (5) auf ihrer dem Fahrzeuginnenraum (1) abgewandten Seite mit einem Steg (6) versehen ist.

5. Baugruppe nach Anspruch 4, **dadurch gekennzeichnet**, daß der Steg (6) ein einziges Bauteil bildend mit dem Stützelement (4; 11) verbunden ist.

6. Baugruppe nach einem der vorhergehenden Ansprüche, **dadurch gekennzeichnet**, daß die Abdeckung (5) an ihrer dem Fahrzeuginnenraum (1) abgewandten Seite mit einem Schaumstoff versehen ist.

7. Baugruppe nach einem der vorhergehenden Ansprüche, **dadurch gekennzeichnet**, daß die Abdeckung (5) mit dem Steg (6) und dem Stützelement (4; 11) ein einziges Bauteil bildend verbunden und ein Kunststoffspritzgußbauteil ist.

8. Baugruppe nach einem der vorhergehenden Ansprüche, **dadurch gekennzeichnet**, daß sich das Stützelement (4; 11) in etwa horizontal von der Abdeckung (5) weg erstreckt.

9. Baugruppe nach einem der vorhergehenden Ansprüche, **dadurch gekennzeichnet**, daß das Stützelement (4; 11) an seinem der Abdeckung (5) abgewandten Ende eine hakenförmige Abwinkelung (16; 17) aufweist.

10. Baugruppe nach einem der vorhergehenden Ansprüche, **dadurch gekennzeichnet**, daß die Cockpitverkleidung (3) an ihrer dem Fahrzeuginnenraum (1) abgewandten Seite mit vertikalem Abstand zueinander zwei Stützelemente (4, 11) aufweist, die in jeweils einen karosseriefesten Halter (2, 10) einführbar und in diesem halterbar sind.

11. Baugruppe nach Ansprüchen 8 bis 10, **dadurch gekennzeichnet**, daß die Abwinkelung (17) des oberen Stützelements (11) unter in etwa 90° und die Abwinkelung (16) des unteren Stützelements (4) unter in etwa 150° gegenüber dem jeweils in etwa horizontal angeordneten, der Abdeckung (5) zugewandten Teil der Stützelemente (4; 11) nach unten gerichtet ist.

12. Baugruppe nach einem der vorhergehenden Ansprüche, **dadurch gekennzeichnet**, daß eine karosseriefeste Abstützung (7) vorgesehen ist und daß die Cockpitverkleidung (3) an die Abstützung (7) anlegbar ist.

13. Baugruppe nach Anspruch 12, **dadurch gekennzeichnet**, daß die Abstützung (7) eine Nut (8) zur Aufnahme eines freien Endes (9) der Abdeckung (5) aufweist.

14. Baugruppe nach einem der vorhergehenden Ansprüche, **dadurch gekennzeichnet**, daß der Halter (2; 10) eine obere und eine untere Begrenzung, die in etwa parallel zueinander und quer zum Stützelement (4; 11) verlaufen, aufweist und daß das Stützelement (4; 11) zwischen die Begrenzungen einführbar ist.

15. Baugruppe nach Anspruch 14, **dadurch gekennzeichnet**, daß die Begrenzung jeweils ein Bolzen (14, 15) ist.

16. Baugruppe nach Anspruch 14, **dadurch gekennzeichnet**, daß die Begrenzung jeweils eine Kante einer Platte (12, 13) ist.

17. Baugruppe nach einem der vorhergehenden Ansprüche, **dadurch gekennzeichnet**, daß der Halter (2; 10) an einer Instrumententafel oder an einem Cockpitquerträger angeordnet ist.

**18.** Baugruppe nach einem der vorhergehenden Ansprüche, **dadurch gekennzeichnet**, daß die Cockpitverkleidung (3) in ihrem oberen Bereich (18) einen Klips zur Verrastung mit einer Instrumententafel aufweist.

**19.** Baugruppe nach einem der vorhergehenden Ansprüche, **dadurch gekennzeichnet**, daß die Cockpitverkleidung (3) eine Fußraumverkleidung ist.

**20.** Baugruppe nach einem der vorhergehenden Ansprüche, **dadurch gekennzeichnet**, daß die Cockpitverkleidung mit einem Luftkanal oder einem Handschuhkasten versehen ist.

**21.** Verfahren zur Befestigung einer Cockpitverkleidung an einem Halter in einer Baugruppe nach einem der vorhergehenden Ansprüche, **dadurch gekennzeichnet**, daß die Cockpitverkleidung (3) mit einem an ihrer dem Fahrzeuginnenraum (1) abgewandten Seite angeordneten Stützelement (4; 11) in einen karosseriefesten Halter (2; 10) eingehängt, um eine imaginäre Schwenkachse (S) verschwenkt und in in etwa horizontaler Richtung in den Halter (2; 10) eingeschoben wird.

**22.** Verfahren zur Befestigung einer Cockpitverkleidung an einem Halter in einer Baugruppe nach einem der Ansprüche 1 bis 20, **dadurch gekennzeichnet**, daß die Cockpitverkleidung mit einem an ihrer dem Fahrzeuginnenraum abgewandten Seite angeordneten Stützelement in einen karosseriefesten Halter eingehängt, in in etwa horizontaler Richtung in den Halter eingeschoben und um eine imaginäre Schwenkachse verschwenkt wird.

**23.** Verfahren nach Anspruch 21 oder 22, **dadurch gekennzeichnet**, daß die Verschwenkung (Rotationswinkel $\alpha$) um die Schwenkachse (S) 3 bis 5° und der Einschiebeweg (Translationsweg a) 15 bis 25 mm beträgt.

**24.** Verfahren nach einem der Ansprüche 21 bis 23, **dadurch gekennzeichnet**, daß beim Einschieben ein freies Ende (9) der Cockpitverkleidung (3) in eine Nut (8) einer karosseriefesten Abstützung (7) eingeführt wird.

**25.** Verfahren nach einem der Ansprüche 21 bis 24, **dadurch gekennzeichnet**, daß die Cockpitverkleidung (3) nach dem Einschieben oder nach dem Verschwenken mittels eines in ihrem oberen Randbereich (18) angeordneten klipses mit einer Instrumententafel verrastet wird.

Fig. 1

EP 0 999 090 A2

Fig. 2